# EUROPÄISCHE PATENTSCHRIFT

(11) **EP 0 679 480 B1**
(45) Veröffentlichungstag und Bekanntmachung des Hinweises auf die Patenterteilung: **02.09.1998**
(21) Anmeldenummer: 95104534.3
(22) Anmeldetag: 28.03.1995
(51) Int. Cl.: B25J 13/08, B25J 15/02

(54) **Parallelgreifer mit Spindelantrieb**
Parallel gripper with drive screw
Pince à doigts parallèles mus par une vis sans fin

(30) Priorität: 28.03.1994 DE 4411319
(43) Veröffentlichungstag der Anmeldung: 02.11.1995
(73) Patentinhaber: SIEMENS AKTIENGESELLSCHAFT, 80333 München (DE)
(72) Erfinder: Thom, Heinz, Dr.-Ing., D-12681 Berlin (DE); Neumann, Alfred, D-15366 Hönow (DE); Johansen, Wolfgang, D-12459 Berlin (DE); Zier, Peter, D-12526 Berlin (DE)

(56) Entgegenhaltungen:
- EP-A- 0 147 082
- DE-A- 3 822 435
- GB-A- 2 184 996
- US-A- 4 478 089
- US-A- 4 819 978
- IBM TECHNICAL DISCLOSURE BULLETIN, Bd. 27, Nr. 1B, Juni 1984 NEW YORK US, Seiten 772-773, GLASSMAN 'COMPLIANT GRIPPER'

## Beschreibung

Die Erfindung betriffl einen Parallelgreifer mit einem oder zwei Spindelantrieben.

Bekannt ist eine Greifeinrichtung mit Greifbacken, die zur Verstellung der Greiföffnung durch einen Motor über ein Schneckengetriebe mittels Gewindespindeln verschoben werden (DE-OS 3606874).
Der Motor - insbesondere ein Schrittmotor - ist hierbei in Schneckenlängsrichtung gegen eine Vorspannkraft verschiebbar gelagert. Eine genaue Greifkraftmessung an jedem Finger sowie eine Ermittlung der Greifposition ist nicht möglich.
Weiterhin ist ein Parallelgreifer mit Spindelantrieb und Anwesenheitskontrolle bekannt (DE-OS 3905 656), bei dem durch eine spezielle Schalteranordnung in Verbindung mit der Spindelmutter während des Greifvorganges ein Schaltsignal ausgelöst wird, wenn durch einen anwesenden Körper und den dadurch auftretenden Druck auf die Finger der Schalter betätigt wird. Dieser Schalter ist mit der Motorsteuerung verbunden, die aufgabengemäß entsprechende Steuersignale für den Motor erzeugt. Auch in diesem Fall ist eine Messung und Regelung der Greifkraft nicht möglich.
Es gehören auch Lösungen zum Stand der Technik, bei denen über den aufgenommenen Motorstrom die Greifkraft indirekt ermittelt wird (DE-OS 3910801). Diese Methode ist erstens ungenau, und zweitens erlaubt sie nicht die Greifkraftermittlung am einzelnen Finger.
In der US-PS 4132 318 wird ein Manipulatorsystem mit einem Zweifingergreifer beschrieben, bei welchem jeder Finger über ein sechskomponentiges Kraft-Momentensystem mit dem Greiffingerantrieb verbunden ist. Beide Meßsysteme sind asymmetrisch. Kräfte und Momente werden über gemessene Verformungen ermittelt.
Diese Greifanordnung ist nicht stabil, ein zuverlässiges, determiniertes Greifen kann nicht erfolgen, da die Finger in allen Richtungen auslenkbar sind.
Darüber hinaus sind Überlastsicherungen nicht ersichtlich und möglich.

US-A-4819978 stellt den nächstkommenden stand der Technik dar, und beschreibt einen Parallelgreifer mit Spindelantrieb, bei dem für die beiden Greiffinger ein Radgetriebe mit einem Elektromotor verbunden ist, und die verlängerte Achse des Rades als Spindel ausgeführt ist, auf der sich ein oder zwei in Bewegungsrichtung der Finger geführte und damit gegen Verdrehung gesicherte Supporte mit jeweils einer Spindelmutter bewegen, wobei bei zwei vorgesehenen Supporten diese sich beidseitig des Rades auf der Spindel gegenläufig bewegen, mit einer Kraftmeßeinrichtung für jeden Finger unter Verwendung von Verformabschnitten mit Dehnungsindikatoren, wobei der Führungs-und Antriebsbereich des Supports über vier in der Ebene senkrecht zur Bewegungsrichtung der Greiffinger seitlich vom Führungs-und Antriebsbereich des Supports verlaufende Stege zur Messung der am jeweiligen Greiffinger angreifenden Greifkraft über die elastische Biegung der Stege nur in Bewegungsrichtung der Greiffinger mit der Fingerbefestigungsplatte des Supports seitlich fest verbunden ist, wobei jeweils zwei Stege parallel verlaufen und in Bewegungsrichtung der Greiffinger hintereinanderliegend angeordnet sind.

Der in Anspruch 1 angegebenen Erfindung liegt das Problem zugrunde, das direkte Messen der Greifkraft an den einzelnen Fingern von Parallelgreifern sicher und zuverlässig bei möglichst geringem gerätetechnischen Aufwand Zu gewährleisten.

Die mit der Erfindung erzielten Vorteile bestehen insbesondere darin, daß durch die erfindungsgemäße Ausgestaltung der Supporte eine direkte und genaue Messung der Greifkraft an jedem Finger determiniert erfolgt, wobei nur in Richtung der Greiffingerbewegung Verformungen der Meßstege auftreten und ein Abkippen der Finger nicht möglich ist.
Über eine Steuereinrichtung gemäß Anspruch 2, die Signale der Dehnungsindikatoren erhält, und den mit ihr verbundenen Motor ist es somit möglich, die Greifkraft zu programmieren, den Greifabstand, d.h. die Größe des gegriffenen Körpers zu ermitteln und auch die Positon des Körpers zum Greifen von fixierten Teilen festzustellen.

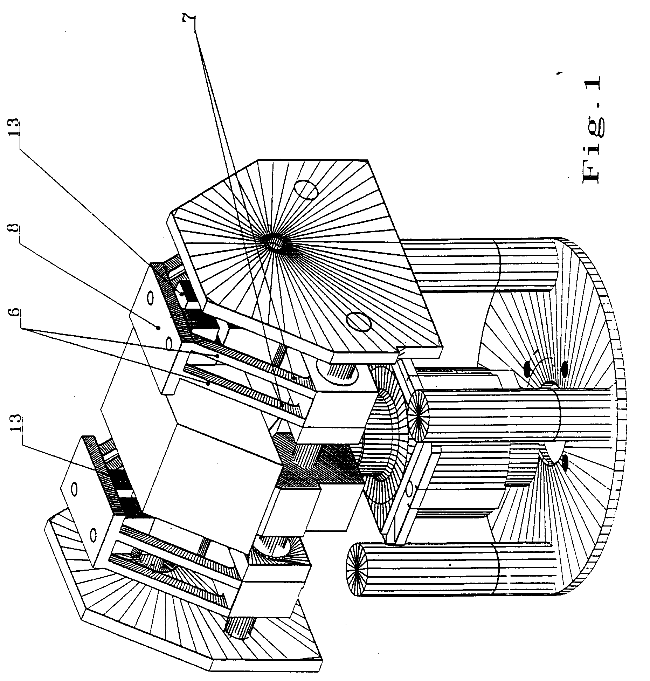

Ein Ausführungsbeispiel der Erfindung ist in der Zeichnung dargestellt und wird im folgenden näher beschrieben.
Dabei zeigen
Fig. 1 eine perspektivische Ansicht des Greifers ohne Gehäuse

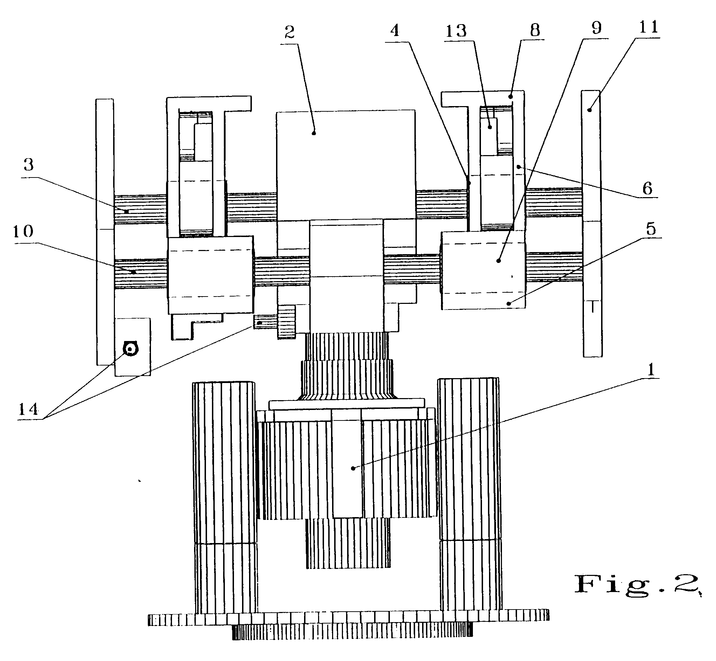

Fig. 2 eine Schnittdarstellung des Greifers

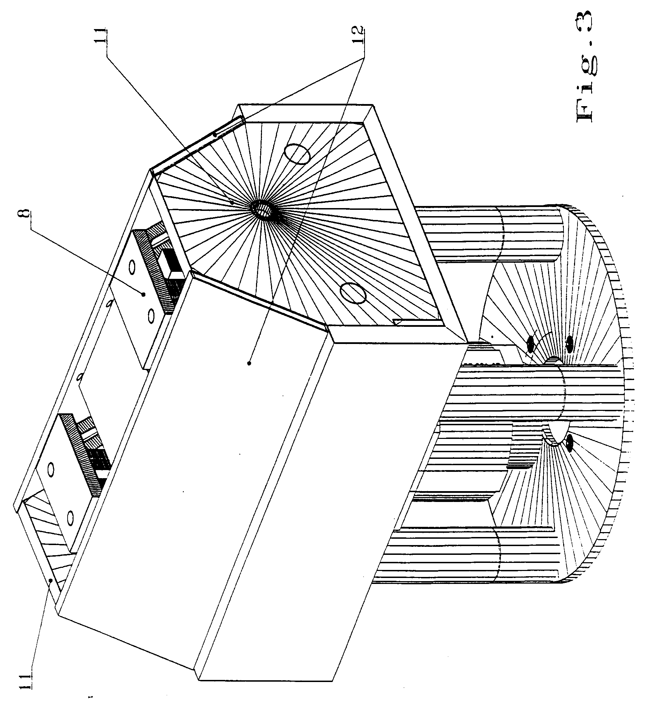

Fig. 3 eine perspektivische Ansicht des Greifers mit Gehäuse.

Ein als Schrittmotor ausgeführter Elektromotor 1, dessen Befestigung an einer Grundplatte und Verbindung mit einem Getriebegehäuse 2 eines Schneckenradgetriebes auf bekannte Art und Weise erfolgt und deshalb nicht näher erläutert wird, treibt das an sich bekannte und deshalb ebenfalls nicht näher dargestellte Schneckenradgetriebe an. Die beidseitig verlängerte Achse des Schneckenrades ist als Spindel 3 ausgeführt. Auf jeder Spindelseite läuft eine Spindelmutter 4, die mit dem Führungs- und Antriebsbereich 5 eines Supports fest verbunden ist, wobei die Bewegungsrichtung der beiden Supporte gegenläufig ist.
Jeder Führungs- und Antriebsbereich 5 des Supports weist zwei Bohrungen mit Gleitbuchsen 9 auf, die sich beidseitig der Spindelmutter 4 befinden.
Mit diesen Gleitbuchsen 9 bewegt sich jeder Support zur Führung auf zwei Führungsbolzen 10, die jeweils mit dem Getriebegehäuse 2 und einer Gehäuseseitenwand 11 des stabilen Gehäuses 12 fest verbunden sind.
Das Gehäuse hat neben der Schutz- und Abschlußfunktion auch eine Stützfunktion.
Jeder Führungs- und Antriebsbereich 5 des Supports ist über vier Stege 6 mit einer Fingerbefestigungsplatte 8 für den jeweiligen Greiffinger seitlich fest verbunden, wobei jeweils zwei parallel verlaufende, in Bewegungsrichtung hintereinanderliegende Stege 6 in der Nähe einer Gleitbuchse 9 mit dem Führungs- und Antriebsbereich 5 des Supports verbunden sind.

An jedem Steg 6 befindet sich ein Dehnungsindikator 7 - Dehnmeßstreifen.
Die Abmessungen der Stege sind in Richtung der Greifbewegung geringer ausgeführt als in der dazu senkrechten Richtung, so daß mit der erfindungsgemäßen Lösung nur in der Greifrichtung eine gezielte Verbiegung auftritt. Die zwei jeweils in Greifbewegungsrichtung hintereinander angeordneten Stege bewirken, daß bei Belastung die Fingerbefestigungsplatte 8 nicht abkippt, sondern annähernd parallel verschoben wird.
Zur Verhinderung einer Überbeanspruchung der Stege 6 mit den Dehnungsindikatoren 7 ist ein Überlastschutz 13 vorgesehen. Dieser besteht aus einstellbaren Anschlägen, die jeweils an der Fingerbefestigungsplatte 8 und dem Führungs- und Antriebsbereich 5 des Supports befestigt sind.
Weiterhin sind induktive Geber 14 als Endlagenschalter zur Rückmeldung über den Öffnungszustand des Greifers vorhanden.
Sie dienen gleichzeitig zur zusätzlichen Überlastsicherung und Synchronisation.
Während des Greifens eines Körpers werden auf Grund der auf die Finger ausgeübten Kraft die Stege verbogen. Dadurch werden über die Dehnmeßstreifen Meßsignale über die am jeweiligen Finger angreifenden Kräfte erzeugt, die einer Steuereinheit zugeführt werden.
Diese erhält auch Signale von einer an sich bekannten Motordrehzahl- und -drehwinkelmeßeinrichtung, die bei Verwendung eines Schrittmotors die ausgeführten Schritte ermittelt und zählt.
Mit aufgabengemäßer und einem Fachmann geläufiger Auswertung dieser Signale mittels der Steuereinheit kann also die
- Schrittweite programmiert werden,
- der Greifabstand bestimmt werden, z.B. zum Teile sortieren,
- die Greifkraft programmiert werden, z.B. für eine Montage mit minimalen Fügekräften,
- die Position des Körpers zum Greifen von fixierten Teilen ermittelt werden.
Ist jedem Finger ein separater Antrieb zugeordnet, so kann die Greifbewegung auch asymmetrisch erfolgen, so daß auch nicht exakt geordnete Teile gegriffen werden können, ohne den Greifer extra zu bewegen.

## Patentansprüche

1. Parallelgreifer mit Spindelantrieb,
bei dem für die beiden Greiffinger oder für jeden Finger separat die Schnecke eines Schneckenradgetriebes mit einem Elektromotor (1), vorzugsweise Schrittmotor, verbunden ist und die verlängerte Achse des Schneckenrades als Spindel (3) ausgeführt ist, auf der sich bei separat angetriebenen Fingern ein und bei gemeinsam angetriebenen Fingern zwei in Bewegungsrichtung der Finger über auf zwei parallel zur Spindel (3) angeordnete Führungsbolzen (10) laufenden Gleitbuchsen (9) geführte und damit gegen Verdrehung gesicherte Supporte mit jeweils einer Spindelmutter (4) bewegen, bei dem sich bei gemeinsam angetriebenen Fingern die zwei Supporte beidseitig des Schneckenrades auf der Spindel (3) gegenläufig bewegen, mit einer Kraftmeßeinrichtung für jeden Finger unter Verwendung von Verformabschnitten mit Dehnungsindikatoren, wobei der Führungs- und Antriebsbereich (5) des dem jeweiligen Finger zugeordneten Supports über vier in der Ebene senkrecht zur Bewegungsrichtung der Greiffinger seitlich vom Führungs- und Antriebsbereich des Supports verlaufende Stege (6) zur Messung der am jeweiligen Greiffinger angreifenden Greifkraft über die elastische Biegung der Stege nur in Bewegungsrichtung der Greiffinger mit der Fingerbefestigungsplatte (8) des Supports fest verbunden ist, wobei jeweils zwei Stege (6) parallel verlaufen und in ßewegungsrichtung der Greiffinger hintereinanderliegend angeordnet sind, und wobei die Stege (6) in der Nähe der Gleitbuchsen (a) an dem Antriebs- und Führungsbereich befestigt sind und sich die zwei Gleitbuchsen (a) von der Fingerbefestigungsplatte (8) für den jeweiligen Finger aus betrachtet seitlich hinter der Spindel (3) befinden.

2. Parallelgreifer nach Anspruch 1, dadurch gekennzeichnet,
daß die Dehnungsindikatoren (7) an eine Steuereinrichtung angeschlossen sind, die nach aufgabengemäßer Auswertung der Signale der Dehnungsindikatoren sowie der Signale einer ebenfalls angeschlossenen Motordrehzahl- und - drehwinkelmeßeinrichtung, z.B. nach Erreichen einer bestimmten Kraft, entsprechende Steuersignale an den ebenfalls angeschlossenen Elektromotor abgibt.

## Claims

1. Parallel gripper with spindle drive, in the case of which for the two gripping fingers, or for each finger separately, the worm of a worm-gear mechanism is connected to an electric motor (1), preferably a stepping motor, and the extended axle of the worm wheel is designed as a spindle (3) on which, in the case of fingers being driven separately, a single support moves by way of a spindle nut (4) or, in the case of fingers being driven together, two supports move by way of in each case one spindle nut (4), said supports being guided in the direction of movement of the fingers via slide bushes (9), running on two guide bolts (10) arranged parallel to the spindle (3), and thus being secured against rotation, in the case of which, when the fingers are driven together, the two supports on either side of the worm wheel run in opposite directions on the spindle (3), having a force-measuring device for each finger using deformation sections with expansion indicators, it being the case that the guide and drive region (5) of the support assigned to the respective finger is fixedly connected to the finger-fastening plate (8) of the support via four webs (6), which run in the plane perpendicular to the direction of movement of the gripping fingers, to the sides of the guide and drive region of the support, for the purpose of measuring the gripping force acting on the respective gripping finger, said measurement being carried out via the elastic bending of the webs only in the direction of movement of the gripping fingers, it being the case that in each case two webs (6) run parallel and are arranged one behind the other in the direction of movement of the gripping fingers, and it being the case that the webs (6), in the vicinity of the slide bushes (9), are fastened on the drive and guide region and, as seen from the finger-fastening plate (8) for the respective finger, the two slide bushes (9) are located laterally behind the spindle (3).

2. Parallel gripper according to Claim 1, characterized in that the expansion indicators (7) are connected to a control device which, following task-related evaluation of the signals of the expansion indicators and of the signals of a likewise connected device for measuring rotational speed, and angle of rotation, of the motor, e.g. once a specific force has been reached, emits appropriate control signals to the likewise connected electric motor.

## Revendications

1. Pince à doigts parallèles et à entraînement par broche, dans lequel, pour les deux doigts de préhension ou pour chaque doigt séparément, la vis d'un engrenage à roue hélicoïdale est reliée à un moteur (1) électrique, de préférence à un moteur pas à pas, et l'axe prolongé de la roue hélicoïdale est réalisé en broche (3) sur laquelle, pour des doigts entraînés séparément (1) un chariot et, pour des doigts entraînés conjointement, deux chariots comportant chacun un écrou (4) de broche, guidés par l'intermédiaire de douilles (9) de guidage glissant sur deux tiges (10) de guidage disposées parallèlement à la broche (3), les chariots étant donc bloqués en rotation, se déplacent dans la direction de déplacement des doigts, dans lequel, pour des doigts entraînés conjointement, les deux chariots se déplacent en sens inverse sur la broche (3) de part et d'autre de la roue hélicoïdale, qui comporte un dispositif dynamométrique pour chaque doigt avec utilisation de tronçons déformables à indicateurs d'allongement, la zone (5) de guidage et d'entraînement du chariot affecté au doigt associé étant reliée rigidement à la plaque (8) de fixation du doigt du support seulement dans la direction de déplacement des doigts de préhension, par l'intermédiaire de quatre barrettes (6) s'étendant dans le plan perpendiculaire à la direction de déplacement des doigts de préhension, latéralement à la zone de guidage et d'entraînement du chariot, pour mesurer la force de préhension attaquant le doigt de préhension associé par l'intermédiaire de la flexion élastique des barrettes respectivement deux barrettes (6) s'étendant parallèlement et étant disposée l'une derrière l'autre dans la direction de déplacement des doigts de préhension, et les barrettes (6) étant fixées à proximité des douilles (9) de guidage, sur la zone d'entraînement et de guidage, et les deux douilles (9) de guidage se trouvant, vu de la plaque (8) de fixation du doigt associé, latéralement derrière la broche (3).

2. Pince à doigts parallèles suivant la revendication 1, caractérisé en ce que les indicateurs (7) d'allongement sont raccordés à un dispositif de commande qui, après exploitation conformément à sa fonction des signaux des indicateurs d'allongement ainsi que des signaux d'un dispositif de mesure de vitesse de rotation du moteur et d'angle de rotation également raccordé fournit, par exemple une fois une force déterminée atteinte, des signaux de commande adéquats au moteur électrique également raccordé.
